# FASCICULE DE BREVET EUROPEEN

(11) **EP 1 505 750 B1**
(45) Date de publication et mention de la délivrance du brevet: **30.08.2006**
(21) Numéro de dépôt: 04077221.2
(22) Date de dépôt: 03.08.2004
(51) Int. Cl.: H04B 10/20, H04J 14/02, H04L 12/437

(54) **Procédé, dispositif et système de protection d'un réseau optique constitué d'anneaux optiques**
Verfahren, Vorrichtung und System zum Schutz vor Fehlern in einem optischen Ringnetzwerk
Method, apparatus and system for protection of an optical network with a ring-shaped topology

(30) Priorité: 07.08.2003 FR 0309726
(43) Date de publication de la demande: 09.02.2005
(73) Titulaire: SAGEM Communication, 75015 Paris (FR)
(72) Inventeur: Betoule, Daniel, 22700 Perros-Guirec (FR)
(74) Mandataire: Maillet, Alain

(56) Documents cités:
- WO-A-01/17151
- WO-A-02/080428

## Description

La présente invention concerne un procédé et un dispositif de protection d'un réseau optique constitué d'anneaux optiques.

Plus précisément, l'invention s'applique au domaine des réseaux optiques en anneaux de type WDM acronyme des termes anglais « Wavelenght Division Multiplexing ».

Les réseaux optiques WDM sont basés sur la technique du multiplexage de longueurs d'ondes des signaux optiques sur une même fibre optique. Selon cette technique, plusieurs signaux optiques sont envoyés simultanément sur une même fibre optique chacun à une longueur d'onde distincte.

La technologie DWDM ou « Dense Wavelenght Division Multiplexing » est une amélioration de la technologie WDM dans laquelle le nombre de longueurs d'ondes permises est accru.

La recommandation internationale UIT-T G.694.1 de l'Union Internationale des télécommunications définit le peigne de longueurs d'ondes autorisées dans la seule fenêtre de transmission 1530-1625 nm. Dans cette recommandation, est défini aussi l'espacement en nanomètres (nm) entre deux longueurs d'ondes permises dans la fenêtre de transmission.

Les applications des réseaux optiques WDM sont multiples : les réseaux de type MAN acronyme de « Metropolitan Area Network », les réseaux de type WAN acronyme de « Wide Area Network», etc...

Dans les réseaux optiques en anneaux fermés, les signaux optiques se propagent tout au long de la fibre optique formant un anneau. Lorsque, pour augmenter la longueur de l'anneau, il est fait appel à des amplificateurs optiques, le bruit généré par chaque amplificateur optique se propage aussi tout au long de l'anneau et peut provoquer une oscillation de l'anneau.

En effet, lorsque le gain total du système constitué de l'anneau optique et des amplificateurs optiques est égal ou supérieur à l'unité, le bruit généré par chaque amplificateur de l'anneau optique est amplifié et l'anneau optique entre en oscillation perturbant ainsi fortement la communication dans l'anneau.

Lorsque le gain total du système constitué de l'anneau optique et des amplificateurs est inférieur et proche de l'unité, le bruit généré par les amplificateurs optiques s'accumule dans l'anneau optique et dégrade notamment le rapport signal sur bruit des signaux optiques. Ceci perturbe aussi la communication dans l'anneau.

Ainsi, afin d'éviter les problèmes d'oscillation et de bruit liés à la structure des réseaux optiques basés sur des anneaux optiques fermés, il est recouru à des anneaux optiques dits ouverts tels que l'anneau décrit dans la demande de brevet PCT WO 02080428.

Dans cette demande, afin d'assurer en permanence la protection du réseau optique, l'anneau optique est constitué de deux fibres optiques.

Nous entendons ici par protection du réseau, une technique permettant de pallier à une détérioration ou une coupure d'une portion d'un ou des deux anneaux optiques, afin d'assurer la continuité des communications dans l'attente d'une opération de maintenance pour réparer l'anneau optique ou les anneaux optiques coupés ou détériorés.

Si une des fibres optiques est coupée ou détériorée, les informations véhiculées par la fibre optique coupée ou détériorée sont basculées sur l'autre fibre optique et ainsi la communication est toujours assurée.

En général, une fibre optique est considérée comme principale pour la transmission unidirectionnelle d'informations sous forme d'un signal optique et l'autre fibre optique est dédiée à la protection.

Les réseaux optiques constitués d'anneaux de ce type sont classiquement appelés réseaux autorisant une protection de ligne.

Ces réseaux autorisent une protection de ligne de type OSNC ou de type OMS-SPRing.

OSNC est l'acronyme de Optical Sub Network Connection. Un réseau OSNC est constitué de deux anneaux optiques dans lesquels les données sont dupliquées sur chacun des anneaux. Lorsque le réseau est coupé en un point de l'anneau, la communication n'est pas interrompue car les données circulent sur les deux anneaux.

OMS-SPRing est l'acronyme de Optical Multiplex Section Shared Protection Ring. Dans un réseau OMS-SP-Ring comportant un nombre prédéterminé de longueurs d'ondes, par exemple trente deux longueurs d'ondes, seize longueurs d'ondes sont allouées à la transmission de données, les seize autres sont réservées à la protection. Un réseau OMS-SP-Ring est aussi constitué de deux anneaux optiques et lorsque qu'un anneau optique est coupé, les données transmises sur l'anneau coupé sont transférées sur les longueurs d'ondes de protection de l'autre anneau.

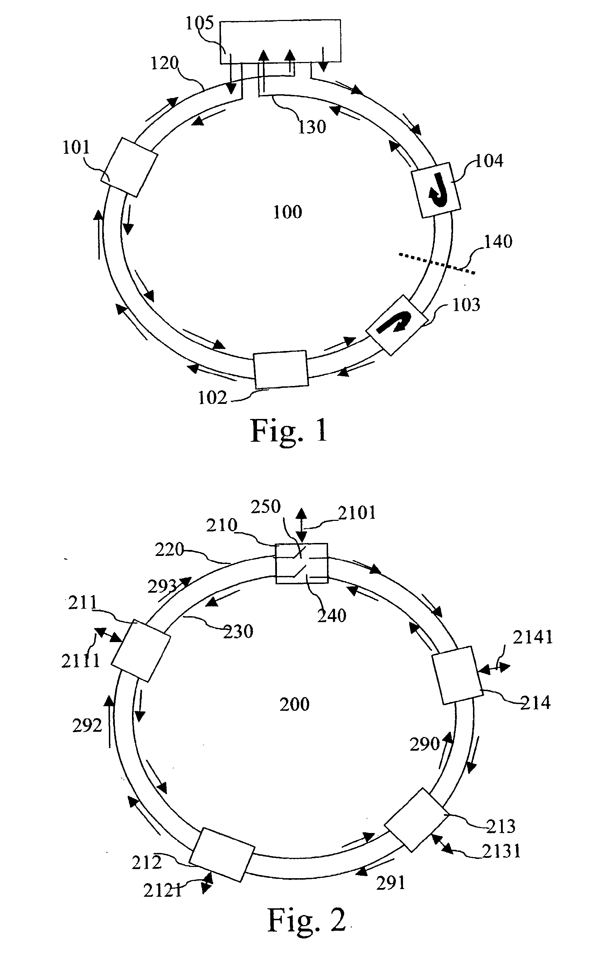

En Fig. 1, est représenté un exemple d'un réseau optique en anneau ouvert reconfigurable tel que décrit dans l'état de la technique.

Ce réseau optique 100 est constitué d'un noeud de communication ouvert 105 et de noeuds de communication 101, 102, 103 et 104 et comporte deux anneaux optiques 120 et 130.

Lorsque le réseau optique 100 est coupé, par exemple au point noté 140, les noeuds de communication 103 et 104 proches de la coupure 140 basculent les informations véhiculées par l'anneau optique 120 sur l'anneau optique 130 et inversement. Ainsi, le noeud de communication 104 effectue une conversion optique-électrique et électrique-optique des informations véhiculées par l'anneau optique 120 vers l'anneau optique 130. Le noeud de communication 103 effectue une conversion optique-électrique et électrique-optique des informations véhiculées par l'anneau optique 130 vers l'anneau optique 120.

Le noeud de communication ouvert 105, quant à lui, effectue une conversion optique-électrique et électrique-optique des informations véhiculées par la partie gauche de l'anneau optique 120 de la Fig. 1 vers la partie droite de l'anneau optique 120 de la Fig. 1. Le noeud de communication 105 effectue de même une conversion optique-électrique et électrique-optique des informations véhiculées par la partie à droite de l'anneau optique 130 de la Fig. 1 vers la partie gauche de l'anneau optique 130 de la Fig. 1.

Les différents trajets des trains numériques dans le réseau optique 100 sont représentés par des flèches à la Fig. 1.

La solution telle que proposée dans la demande de brevet PCT WO 02080428 est une solution complexe et difficile à réaliser industriellement.

En effet, trois noeuds de communication doivent effectuer des opérations prédéterminées lors d'une coupure du réseau optique. Le noeud de communication ouvert 105 doit simultanément transférer les informations véhiculées par la partie à l'est de l'anneau optique 130 de la Fig. 1 vers la partie à l'ouest de l'anneau optique 130 de la Fig. 1 et transférer les informations véhiculées par la partie à l'ouest de l'anneau optique 120 de la Fig. 1 vers la partie à l'est de l'anneau optique 120 de la Fig. 1 et cela en effectuant pour chacun une conversion optique-électrique et électrique-optique.

Les noeuds 103 et 104 à proximité de la coupure doivent basculer les informations véhiculées par l'anneau optique 120 sur l'anneau optique 130 et inversement et cela en effectuant chacun une conversion optique-électrique et électrique-optique.

Ainsi, le noeud ouvert 105 doit comporter des fonctionnalités complexes différentes des autres noeuds et chaque autre noeud du réseau optique 100 doit être apte à transférer les informations véhiculées sur un anneau optique sur l'autre anneau optique.

Ceci augmente notablement le coût d'un tel système et augmente, de part la quantité de conversions optique-électriques et électrique-optiques, la complexité du noeud de communication.

De plus, lorsque le chemin de protection est emprunté, le trajet des données peut, dans cette configuration, être supérieur à la longueur totale de l'anneau, voire même être proche de deux fois la longueur totale de l'anneau. Ceci pénalise aussi la qualité de la communication.

L'invention a pour but de résoudre les inconvénients de l'art antérieur en proposant un procédé de protection d'un réseau optique configurable dans une première et une seconde configurations, le réseau optique étant constitué d'au moins une paire d'anneaux optiques ouverts reliant des noeuds de communication, un des noeuds de communication dit noeud de communication maître comportant des moyens d'ouverture et/ou de fermeture des anneaux optiques, les anneaux optiques étant ouverts au niveau du noeud de communication maître dans la première configuration, chaque extrémité de chaque anneau optique étant reliée au noeud de communication maître, caractérisé en ce que le noeud de communication maître effectue les étapes de génération d'un signal prédéterminé à une extrémité de chaque anneau optique d'une paire d'anneaux optiques, de détermination de l'absence du signal prédéterminé dans au moins une autre extrémité d'un anneau optique, de commande de fermeture des moyens d'ouverture et/ou de fermeture des anneaux optiques si le signal prédéterminé est absent dans au moins une autre extrémité d'un anneau optique pour configurer le réseau optique dans la seconde configuration.

Ainsi, il est possible de déterminer si le réseau optique est détérioré ou coupé. Cette coupure générant des problèmes de communication au sein du réseau optique, en commandant la fermeture des interrupteurs optiques du noeud de communication maître, on configure le réseau dans le mode de fonctionnement rétablissant, grâce aux mécanismes de protection précédemment cités, les communications dans le réseau optique.

De plus, les anneaux optiques étant ouverts dans la première configuration, les problèmes liés aux oscillations et aux bruits des anneaux optiques fermés sont évités. La fermeture des interrupteurs optiques du noeud de communication maître préserve néanmoins le réseau optique des problèmes susmentionnés, le réseau optique étant ouvert de part la coupure déterminée.

Avantageusement, les moyens d'ouverture et/ou de fermeture des anneaux optiques sont des interrupteurs optiques.

L'utilisation d'interrupteurs optiques simplifie aussi grandement le traitement des signaux optiques dans le noeud de communication maître. Il n'est plus alors nécessaire d'effectuer des conversions optique-électriques et électrique-optiques de ces signaux.

Plus précisément, le réseau optique est un réseau à multiplexage de longueurs d'ondes, une longueur d'onde d'un canal de supervision étant associée à chaque anneau optique et le signal prédéterminé est généré sur chaque canal de supervision.

Ainsi, la longueur d'onde du canal de supervision n'étant pas amplifiée par les différents noeuds du réseau optique, il est possible de déterminer si un ou plusieurs anneaux sont endommagés.

Plus particulièrement, le procédé comporte en outre les étapes, effectuées à la suite de la commande de fermeture des interrupteurs optiques, de génération d'un signal prédéterminé à une extrémité de chaque anneau optique d'une paire d'anneaux optiques, de détermination de la présence du signal prédéterminé dans l'autre extrémité de chaque anneau optique et de commande d'ouverture des interrupteurs optiques si le signal prédéterminé est présent dans l'autre extrémité de chaque anneau optique pour configurer le réseau optique dans la première configuration.

Ainsi, il est possible de détecter rapidement et de manière automatique la réparation du réseau optique et ainsi de configurer le réseau dans son mode de fonctionnement optimal.

Plus précisément, chaque noeud de communication comporte des amplificateurs optiques d'émission et/ou de réception aptes à fonctionner dans un mode d'amplification des signaux véhiculés par les anneaux optiques ou à fonctionner dans un mode dit de réduction de puissance et le procédé comporte en outre, suite à la commande d'ouverture des interrupteurs optiques, une étape de génération d'au moins un signal prédéterminé pour commander les amplificateurs d'émission et/ou de réception fonctionnant dans le mode dit de réduction de puissance, à fonctionner dans le mode d'amplification des signaux véhiculés par les anneaux optiques.

Ainsi, en ouvrant les interrupteurs optiques préalablement à la commande des amplificateurs optiques d'émission et/ou de réception fonctionnant dans le mode dit de réduction de puissance pour que ceux-ci fonctionnent dans le mode d'amplification des signaux véhiculés par les anneaux optiques, les problèmes liés aux oscillations et/ou aux bruits des anneaux optiques fermés sont évités. Le réseau optique retourne dans un fonctionnement optimal seulement lorsque les anneaux du réseau optique sont ouverts.

Corrélativement, l'invention propose un noeud de communication maître pour la protection d'un réseau optique configurable dans une première et une seconde configurations, le réseau optique étant constitué d'au moins une paire d'anneaux optiques ouverts reliant des noeuds de communication, un des noeuds de communication dit noeud de communication maître comportant des moyens d'ouverture et/ou de fermeture des anneaux optiques, les anneaux optiques étant ouverts au niveau du noeud de communication maître dans une première configuration, chaque extrémité de chaque anneau optique étant reliée au noeud de communication maître, caractérisé en ce que le noeud de communication maître comporte des moyens de génération d'un signal prédéterminé à une extrémité de chaque anneau optique d'une paire d'anneaux optiques, des moyens de détermination de l'absence du signal prédéterminé dans au moins une autre extrémité d'un anneau optique, et des moyens de commande de fermeture des moyens d'ouverture et/ou de fermeture des anneaux optiques si le signal prédéterminé est absent dans au moins une autre extrémité d'un anneau optique pour configurer le réseau optique dans la seconde configuration.

Avantageusement, les moyens d'ouverture et/ou de fermeture des anneaux optiques sont des interrupteurs optiques.

Plus précisément, le noeud de communication maître comporte en outre des moyens de détermination de la présence du signal prédéterminé dans l'autre extrémité de chaque anneau optique et des moyens de commande d'ouverture des interrupteurs optiques si le signal prédéterminé est présent dans l'autre extrémité de chaque anneau optique pour configurer le réseau optique dans la première configuration.

L'invention concerne aussi un système de communication optique configurable dans une première et une seconde configurations, le système de communication optique étant constitué d'au moins une paire d'anneaux optiques ouverts reliant des noeuds de communication, un des noeuds de communication dit noeud de communication maître comportant des moyens d'ouverture et/ou de fermeture des anneaux optiques, les anneaux optiques étant ouverts au niveau du noeud de communication maître dans la première configuration, chaque extrémité de chaque anneau optique étant reliée au noeud de communication maître, caractérisé en ce que le noeud de communication maître comporte des moyens de génération d'un signal prédéterminé à une extrémité de chaque anneau optique d'une paire d'anneaux optiques, des moyens de détermination de l'absence ou la présence du signal prédéterminé dans au moins une autre extrémité d'un anneau optique, des moyens de commande de fermeture des moyens d'ouverture et/ou de fermeture des anneaux optiques si le signal prédéterminé est absent dans au moins une autre extrémité d'un anneau optique pour configurer le réseau optique dans la seconde configuration et des moyens de commande d'ouverture des interrupteurs optiques si le signal prédéterminé est présent dans l'autre extrémité de chaque anneau optique pour configurer le réseau optique dans la première configuration, et les noeuds de communication comportent des amplificateurs optiques d'émission et/ou de réception aptes à fonctionner dans un mode d'amplification des signaux véhiculés par les anneaux optiques ou à fonctionner dans un mode dit de réduction de puissance, des moyens de réception d'au moins un message généré par le noeud de communication maître pour changer le mode de fonctionnement des amplificateurs optiques d'émission et des moyens de commande des amplificateurs optiques d'émission et/ou de réception pour fonctionner selon l'un des deux modes de fonctionnement.

L'invention concerne aussi le programme d'ordinateur stocké sur un support d'informations, ledit programme comportant des instructions permettant de mettre en oeuvre le procédé précédemment décrit, lorsqu'il est chargé et exécuté par un système informatique.

Les avantages du noeud de communication maître, du système de communication optique et du programme d'ordinateur étant identiques aux avantages du procédé selon l'invention, ceux-ci ne seront pas rappelés.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente le réseau optique de l'état de la technique précédemment décrit ;
la Fig. 2 représente un réseau optique selon l'invention ;
la Fig. 3 représente une vue schématique du noeud de communication maître du réseau optique selon l' invention ;
la Fig. 4 représente l'algorithme effectué par le noeud de communication maître du réseau optique selon l'invention pour sécuriser le réseau ;
la Fig. 5 représente un réseau optique selon l'invention dans lequel un anneau optique du réseau optique est coupé ; et
la Fig. 6 représente un réseau optique selon l'invention dans lequel les deux anneaux optiques formant le réseau optique sont coupés.

La Fig. 2 représente un réseau optique 200 selon l'invention. Le réseau optique 200 est un réseau optique en anneau de type DWDM. Bien entendu, le réseau optique 200 peut aussi être plus classiquement un réseau optique en anneau de type WDM.

Le réseau optique 200 est constitué d'au moins deux anneaux optiques constitués par des fibres optiques notées 220 et 230 auxquelles sont reliés des noeuds de communication 211, 212, 213, 214 et 210.

Le réseau optique 200 est un réseau optique autorisant une protection de ligne de type OSNC ou de type OMS-SPRing.

Chacun des anneaux optiques 220 et 230 assure respectivement le transfert de données entre les noeuds de communication 210, 211, 212, 213 et 214 de manière unidirectionnelle.

L'anneau optique 220 est un anneau optique dans lequel les données sont transmises selon un premier sens de transfert dit sens des aiguilles d'une montre. Par exemple, l'anneau 220 assure le transfert d'informations du noeud de communication maître 210 vers les noeuds de communication 214, 213, 212 et 211.

L'anneau optique 230 est un anneau optique dans lequel les données sont transmises selon un second sens de transfert dit sens trigonométrique. Par exemple, l'anneau 230 assure le transfert d'informations du noeud de communication 214 vers le noeud de communication maître 210.

Le noeud de communication maître 210 assure l'ouverture des anneaux optiques 220 et 230 par l'intermédiaire de commutateurs optiques notés 240 et 250 en Fig. 2. Ces interrupteurs optiques 240 et 250 sont, lorsqu'aucune coupure n'existe dans le réseau optique 200, placés en position ouverte. Ils évitent ainsi, dans le réseau optique 200, les problèmes d'oscillation et de bruit précédemment mentionnés.

Ainsi, le réseau optique 200 étant ouvert, lorsque par exemple le noeud de communication 211 transfère des données à destination du noeud de communication 214, celles-ci devront nécessairement être transférées sur l'anneau optique 230 pour arriver à destination. Le noeud de communication maître 210 étant ouvert, un transfert du noeud de communication 211 à destination du noeud de communication 214 par l'intermédiaire de l'anneau de communication 220 n'aboutit pas.

Les noeuds de communication 210, 211, 212, 213 et 214 sont des noeuds aptes à recevoir des données véhiculées par les anneaux de communication 220 et 230 et de les transférer par l'intermédiaire des liaisons respectives 2101, 2111, 2121, 2131 et 2141 vers d'autres dispositifs de communication ou d'autres réseaux de télécommunication non représentés.

Les noeuds de communications 210, 211, 212, 213 et 214 sont des noeuds aptes à transmettre des données reçues de dispositifs de communication auxquels ils sont reliés par l'intermédiaire d'autres réseaux de télécommunication non représentés et de transférer ces données reçues sur les anneaux de communication 220 et 230.

Selon un mode préféré de réalisation de l'invention, chaque noeud de communication 210, 211, 212, 213 et 214 transmet les données sur chacun des anneaux optiques 220 et 230. Ainsi, selon ce mode préféré, les noeuds de communication 210, 211, 212, 213 et 214 n'ont pas besoin de connaître la configuration du réseau optique 200.

Ainsi, lorsque par exemple le noeud de communication 213 transfère sur le réseau optique 200 des données à destination du noeud de communication 214, les données sont transmises sur l'anneau optique 230 suivant la flèche notée 290 en Fig. 2 et les données sont aussi transmises sur l'anneau optique 220 suivant les flèches notées 291, 292, 293 en Fig. 2. L'anneau optique 220 étant ouvert au noeud de communication maître 210, seules les données transmises sur l'anneau optique 230 suivant la flèche notée 290 parviennent au noeud de communication 214.

Selon une variante de réalisation de l'invention, chaque noeud de communication 210, 211, 212, 213 et 214 connaît la configuration du réseau optique 200 et transmet les données sur l'anneau optique 220 ou 230 ne comportant pas d'ouverture entre le noeud de communication émetteur et le noeud de communication destinataire. Plus précisément, chaque noeud de communication 210, 211, 212, 213 et 214 transmet les données sur l'anneau optique 220 ou 230 représentant le plus court trajet entre le noeud émetteur et le noeud destinataire ou le chemin permettant d'accéder au noeud destinataire. Cette connaissance du réseau est par exemple déterminée par l'opérateur du réseau optique 200 lors de la mise en service de celui-ci. Ainsi, selon cette variante, l'utilisation de la bande passante du réseau optique 200 est optimisée.

Ainsi, lorsque par exemple le noeud de communication 213 transfère sur le réseau optique 200 des données à destination du noeud de communication 214, les données sont transmises seulement sur l'anneau optique 230 suivant la flèche notée 290 en Fig. 2.

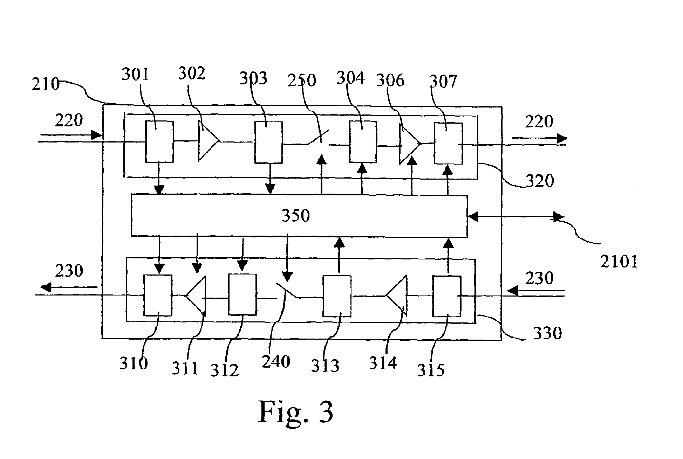

La Fig. 3 représente une vue schématique du noeud de communication maître du réseau optique 200 selon l'invention.

Le noeud de communication maître 210 se décompose en deux chaînes de traitement notées 320 et 330 gérées par un contrôleur 350.

La chaîne de traitement 320 assure le traitement des données circulant sur l'anneau optique 220. Elle est composée d'un module d'extraction optique 301 apte à extraire les informations du canal de supervisation optique OSC. OSC est l'acronyme de « Optical Supervisory Channel ». La chaîne de traitement 320 est aussi constituée d'un amplificateur optique de réception 302, d'un module d'extraction optique 303 des données destinées au réseau ou au terminal de télécommunication relié au noeud de communication maître 210 par l'intermédiaire de la liaison 2101, d'un interrupteur optique 250, d'un module d'insertion optique 304 des données issues du réseau ou du terminal de télécommunication relié par l'intermédiaire de la liaison 2101 au noeud de communication maître 210, d'un amplificateur optique d'émission 306 et d'un module d'insertion d'informations 307 dans le canal de supervisation optique OSC.

Le canal de supervisation optique OSC est un canal à une longueur d'onde prédéterminée, utilisé pour le transport d'informations de contrôle entre les différents noeuds de communication du réseau optique 200.

Le canal OSC est un canal de communication autonome. Il est généralement à la longueur d'onde de 1510 nm.

Le canal de supervisation optique OSC, contrairement aux autres canaux véhiculant des données, n'est pas amplifié dans le réseau optique 200. Ce canal est entre autres et selon l'invention utilisé pour vérifier si, dans le réseau optique 200, un ou plusieurs anneaux optiques sont coupés.

Le module d'extraction optique 301 extrait les informations du canal de supervisation optique OSC. Le module d'extraction optique 301 est constitué d'un filtre optique passe bande accordé à la longueur d'onde du canal de supervisation optique OSC. Un convertisseur optique-électrique non représenté convertit les informations extraites du canal de supervisation optique OSC et les transfère au contrôleur 350.

Le module d'extraction optique 301 comprend aussi un filtre optique réjecteur de bande accordé à la longueur d'onde du canal de supervisation optique OSC. Les données en sortie du module d'extraction optique 301 sont alors dépourvues des informations véhiculées par le canal de supervisation optique OSC.

L'amplificateur optique de réception 302 traite le signal optique issu du module d'extraction optique 301. L'amplificateur optique de réception 302 est par exemple un amplificateur à fibre dopée erbium. L'amplificateur optique de réception 302 traite la totalité des signaux aux différentes longueurs d'ondes du réseau optique 200.

L'amplificateur optique de réception 302 amplifie, selon un mode particulier, seulement un groupe prédéterminé de longueurs d'ondes parmi l'ensemble des signaux aux différentes longueurs d'ondes du réseau optique 200.

L'amplificateur optique de réception 302 comporte aussi des moyens de détection de perte ou de rétablissement du signal optique. Cette perte ou respectivement ce rétablissement de signal optique est par exemple du à une coupure, respectivement à une réparation, de la portion de l'anneau optique 220 comprise entre le noeud de communication 211 et le noeud de communication maître 210.

L'amplificateur optique de réception 302 est commandé par le contrôleur 350. Cet amplificateur 302 est apte à passer dans un mode de réduction de puissance de réception lorsqu'aucun signal n'est détecté ou lorsqu'il reçoit une commande prédéterminée du contrôleur 350.

Inversement, l'amplificateur 302 est apte à passer dans un mode d'amplification normal lorsqu'un signal est détecté ou lorsqu'il reçoit une commande prédéterminée du contrôleur 350.

Le signal en sortie de l'amplificateur optique de réception 302 est ensuite transféré au module d'extraction optique 303 des données destinées au réseau ou au terminal de télécommunication relié au noeud de communication maître 210 par la liaison notée 2101.

Le module d'extraction optique 303 est constitué d'un filtre optique accordé à la ou les longueurs d'ondes des canaux associés aux données destinées au réseau ou au terminal de télécommunication relié au noeud de communication maître 210 par la liaison notée 2101. Un convertisseur optique-électrique non représenté convertit les informations de ces canaux et les transfère au contrôleur 350.

Le module d'extraction optique 303 comprend aussi un filtre optique réjecteur de bande accordé à la ou les longueurs d'ondes du ou des canaux associés aux données destinées au réseau ou au terminal de télécommunication relié au noeud de communication maître 210 par la liaison notée 2101. Les données en sortie du module d'extraction optique 303 sont alors dépourvues des données destinées au réseau ou au terminal de télécommunication relié au noeud de communication maître 210 par la liaison notée 2101.

Le signal en sortie du module d'extraction 303 est ensuite transféré à l'interrupteur optique 250.

L'interrupteur optique 250, en fonctionnement normal, c'est-à-dire lorsqu'aucune détérioration ou rupture de fibre optique n'existe dans le réseau optique 200, est en position ouverte. L'interrupteur optique 250 ouvre ainsi l'anneau optique 220 et évite ainsi les problèmes d'oscillations de l'anneau optique 220 et les problèmes liés à l'accumulation du bruit des différents amplificateurs présents dans l'anneau optique 220.

L'interrupteur optique 250, lorsque qu'une détérioration ou rupture de fibre optique existe dans le réseau optique 200, est en position fermée. Il assure ainsi le transfert du signal en sortie du module d'extraction 303, vers le module d'insertion optique 304 des données issues du réseau ou du terminal de télécommunication relié par l'intermédiaire de la liaison 2101 au noeud de communication ouvert 210.

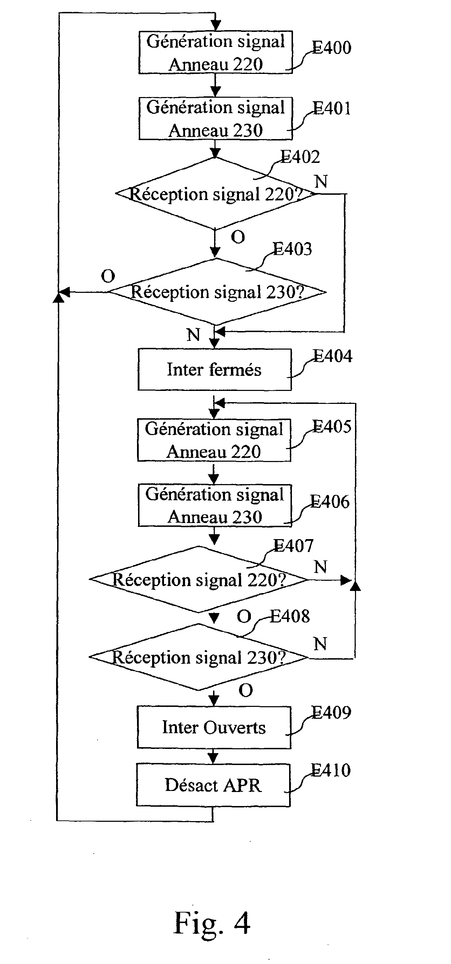

L'interrupteur optique 250 est commandé par le contrôleur 350 conformément à l'algorithme qui sera décrit ultérieurement en regard de la Fig. 4.

Le module d'insertion optique 304 des données transférées par le contrôleur 350 et issues du réseau ou du terminal de télécommunication relié par l'intermédiaire de la liaison 2101 au noeud de communication ouvert 210, insère à une ou plusieurs longueurs d'ondes prédéterminées les données issues du réseau ou du terminal de télécommunication relié par l'intermédiaire de la liaison 2101 au noeud de communication ouvert 210.

Lorsque l'interrupteur optique 250 est fermé, les signaux en sortie du module d'extraction 303 sont multiplexés avec les données issues du réseau ou du terminal de télécommunication relié par l'intermédiaire de la liaison 2101 au noeud de communication maître 210.

L'amplificateur optique d'émission 306 amplifie le signal optique issu du module d'insertion optique 304. L'amplificateur optique d'émission 306 est par exemple un amplificateur à fibre dopée erbium. L'amplificateur optique d'émission 306 amplifie la totalité des signaux aux différentes longueurs d'ondes du réseau optique 200 ou selon un mode particulier seulement un groupe prédéterminé de longueurs d'ondes parmi l'ensemble des signaux aux différentes longueurs d'ondes du réseau optique 200.

Dans ce mode particulier, chaque noeud de communication 210, 211, 212, 213 et 214 du réseau optique 200 assure l'amplification d'un groupe de longueurs d'ondes. L'amplification de l'ensemble des signaux aux différentes longueurs d'ondes du réseau optique 200 est alors assurée par l'ensemble des amplificateurs optiques d'émission et/ou de réception de chaque noeud de communication du réseau optique 200.

L'amplificateur optique d'émission 306 est commandé par le contrôleur 350. Cet amplificateur 306 est apte à passer dans un mode de réduction de puissance d'émission ou inversement lorsqu'il reçoit une commande prédéterminée du contrôleur 350. Les avantages d'une telle caractéristique seront décrits par la suite en référence à la Fig. 4.

Le module d'insertion optique 307 insère les informations du canal de supervisation optique OSC délivrées par le contrôleur 350. Le module d'insertion 307 insère les données de supervisation à la longueur d'onde du canal de supervisation optique OSC. Un convertisseur optique-électrique non représenté convertit les informations délivrées par le contrôleur 350 sous forme de signaux optiques.

La chaîne de traitement 330 assure le traitement des données circulant sur l'anneau optique 230. Elle est composée d'un module d'extraction optique 315 apte à extraire les informations du canal de supervisation optique OSC.

La chaîne de traitement 330 est aussi constituée d'un amplificateur optique de réception 314, d'un module d'extraction optique 313 des données destinées au réseau ou au terminal de télécommunication relié au noeud de communication maître 210 par l'intermédiaire de la liaison 2101, d'un interrupteur optique 240, d'un module d'insertion optique 312 des données issues du réseau ou du terminal de télécommunication relié par l'intermédiaire de la liaison 2101 au noeud de communication maître 210, d'un amplificateur optique d'émission 311 et d'un module d'insertion d'informations 310 dans le canal de supervisation optique OSC.

Le module d'extraction optique 315 est identique au module d'extraction optique 301. Il ne sera donc pas plus décrit.

L'amplificateur optique de réception 314 est identique à l'amplificateur optique de réception 302. Il ne sera donc pas plus décrit.

Le module d'extraction optique 313 est identique au module d'extraction optique 303. Il ne sera donc pas plus décrit.

L'interrupteur optique 240 est identique à l'interrupteur optique 250. Il ne sera donc pas plus décrit.

Le module d'insertion optique 312 est identique au module d'insertion optique 304. Il ne sera donc pas plus décrit.

L'amplificateur optique d'émission 311 est identique à l'amplificateur optique d'émission 306. Il ne sera donc pas plus décrit.

Le module d'insertion optique 310 est identique au module d'insertion optique 307. Il ne sera donc pas plus décrit.

Le contrôleur 350 du noeud de communication maître 210 reçoit les informations de supervisation du canal OSC du module d'extraction optique 301 et du module d'extraction optique 315. Ces informations sont entre autres des informations pour vérifier si le réseau optique comporte une rupture de fibre optique.

Le contrôleur 350 traite ces informations conformément à l'algorithme qui sera décrit ultérieurement en regard de la Fig. 4 et commande entre autres les interrupteurs optiques 240 et 250 en fonction de ces informations.

Ces mêmes informations sont aussi traitées par le contrôleur 350 pour commander la génération d'un signal sur les canaux de supervisation OSC des anneaux optiques 220 et 230 et contrôler ainsi les amplificateurs optiques d'émission des noeuds de communication proches de la coupure.

Le contrôleur 350 génère et/ou transfère des informations à destination des modules d'insertion optiques 307 et 310 pour que celles-ci soient transférées sur le canal OSC du réseau optique 200.

Ces signaux de commande sont par exemple des signaux de commande d'annulation du mode de réduction de puissance des amplificateurs optiques d'émission des noeuds de communication proches de la coupure.

Le contrôleur 350 est aussi apte à traiter des informations générées par un des noeuds de communication du réseau optique 200 représentatives de la détection par un des noeuds de communication de la détection de la perte ou le rétablissement d'un signal optique sur un des anneaux optiques 220 ou 230. Le contrôleur 350 commande le module d'insertion optique 307 ou 310 pour que ces informations soient insérées dans le canal OSC des anneaux 220 ou 230 et soient ainsi transférées aux autres noeuds du réseau optique 200.

Le contrôleur 350 transfère les données reçues des modules d'extraction 303 et 313 destinées au réseau ou au terminal de télécommunication relié au noeud de communication maître 210 par la liaison notée 2101.

Le contrôleur 350 transfère les données reçues du réseau ou du terminal de télécommunication relié au noeud de communication maître 210 par la liaison notée 2101 vers les modules d'insertion 304 et 312.

Le contrôleur 350 comporte au moins une mémoire mémorisant les instructions de l'algorithme qui sera décrit en référence à la Fig. 4 et exécute les instructions dudit algorithme.

Les noeuds de communication 211, 212, 213 et 214 ont une architecture similaire au noeud de communication maître 210. Ces noeuds comportent à la place des interrupteurs optiques 240 et 250 des liaisons optiques telles que par exemple des fibres optiques.

La Fig. 4 représente l'algorithme effectué par le noeud de communication maître du réseau optique 200 pour sécuriser le réseau.

Le contrôleur 350 du noeud de communication maître 210 lit à partir de sa mémoire les instructions du programme correspondant aux étapes E400 à E410 de la Fig. 4 et les charge en mémoire vive non représentée pour les exécuter.

Périodiquement ou de façon continue, le contrôleur 350 effectue les différentes étapes de l'algorithme pour déterminer si au moins une fibre optique du réseau est coupée ou non, et en fonction de cette détermination, commande les interrupteurs 240 et 250.

A l'étape E400, le contrôleur 350 génère et/ou transfère des informations à destination du module d'insertion optique 307 pour que celles-ci soient transférées sur le canal de supervisation optique OSC de l'anneau optique 220. Ces informations sont un signal de test pour déterminer si l'anneau 220 est coupé ou non.

Cette opération réalisée, le contrôleur 350 passe à l'étape E401 et transfère des informations à destination du module d'insertion optique 310 pour que celles-ci soient transférées sur le canal de supervisation optique OSC de l'anneau optique 230. Ces informations sont un signal de test pour déterminer si l'anneau 230 est coupé ou non.

Il est à remarquer ici que dans une variante, les étapes E400 et E401 peuvent être effectuées de manière simultanée.

Il est à remarquer qu'en variante, le contrôleur au lieu de transférer des informations à destination des modules d'insertion optique 307 et 310, transfère respectivement les informations à destination des modules d'insertion optique 304 et 312 pour que celles-ci soient transférées respectivement sur un canal des anneaux optiques 220 et 230. Ces informations ne sont plus alors transmises sur la longueur d'onde du canal de supervisation optique, mais sur une des longueurs d'ondes associées aux données transmises sur les anneaux optiques.

Cette opération effectuée, le contrôleur 350 passe à l'étape suivante E402 qui consiste à vérifier si le signal transféré précédemment à l'étape E400 a été extrait et transféré au contrôleur 350 par le module d'extraction optique 301 du noeud de communication maître 210.

Dans la négative, l'anneau 220 est coupé. En effet, dans un fonctionnement normal de l'anneau optique 220, le signal transféré à l'étape E400 parcourt la totalité de l'anneau 220 pour finalement revenir au noeud de communication maître 210. Si l'anneau est coupé, le signal transféré à l'étape E400 ne se propagera pas le long de la totalité de l'anneau optique et donc ne reviendra pas au noeud de communication maître 210.

Le processeur 350 passe alors à l'étape E404 pour le traitement de cette coupure.

Si le module d'extraction optique 301 du noeud de communication maître 210 a transmis au contrôleur 350 le signal transféré précédemment à l'étape E400, l'anneau 220 n'est pas coupé, le contrôleur 350 passe donc à l'étape suivante E403.

A l'étape E403, le contrôleur 350 vérifie si le signal transféré précédemment à l'étape E401 a été extrait par le module d'extraction optique 315 du noeud de communication maître 210 et lui a été transféré.

Il est à remarquer ici que dans une variante, les étapes E402 et E403 peuvent être effectuées de manière simultanée.

Dans l'affirmative, l'anneau 230 n'est pas coupé. Le contrôleur 350 retourne donc à l'étape E400 précédemment décrites et réitère les étapes E400 à E403 tant qu'au moins l'anneau 220 et/ou l'anneau 230 n'est pas considéré comme coupé.

Si par contre, le module d'extraction optique 315 du noeud de communication maître 210 n'a pas transmis au contrôleur 350 le signal transféré précédemment à l'étape E401, l'anneau 230 est coupé. Le contrôleur 350 passe donc à l'étape suivante E404.

Il est à remarquer ici que selon la variante décrite en référence aux étapes E400 et E401, le contrôleur 350, au lieu de transférer des informations à destination des modules d'insertion optique 307 et 310, a transféré respectivement les informations à destination des modules d'insertion optique 304 et 312. Le contrôleur 350 vérifie aux étapes E402 et E403 si les signaux transférés précédemment ont été extraits et lui ont été transférés par les modules d'extraction optique 303 et 313 du noeud de communication maître 210.

A l'étape E404, le contrôleur 350 commande la fermeture des interrupteurs optiques 240 et 250. Le réseau optique 200 est alors configuré dans un second mode de fonctionnement.

Cette opération réalisée, le contrôleur 350 passe à l'étape E405 qui est identique à l'étape E400. Elle ne sera pas plus décrite.

Cette opération réalisée, le contrôleur 350 passe à l'étape E406 qui est identique à l'étape E401. Elle ne sera pas plus décrite.

Cette opération réalisée, le contrôleur 350 passe à l'étape E407 qui est identique à l'étape E402. Si le test de cette étape est négatif, le contrôleur 350 retourne à l'étape E405 et réitère la boucle constituée des étapes E405 à E407 tant que la coupure de l'anneau optique 220 n'a pas été réparée.

Si le test de l'étape E407 est positif, le contrôleur 350 passe à l'étape E408 qui est identique à l'étape E403. Si le test de cette étape est négatif, le contrôleur 350 retourne à l'étape E405 et réitère la boucle constituée des étapes E405 à E408 tant que la coupure de l'anneau optique 230 n'a pas été réparée.

Si le test de l'étape E408 est positif, aucune fibre optique du réseau optique 200 n'est coupée. Le contrôleur 350 passe à l'étape E409 et commande alors l'ouverture des interrupteurs 240 et 250.

Cette étape effectuée, le contrôleur 350 passe à l'étape suivante E410 et génère un message d'informations sur le canal OSC d'un ou de chaque anneau optique 220 et/ou 230 pour informer les autres noeuds de communication 211, 212, 213 et 214 du rétablissement du réseau optique 200 dans le premier mode de fonctionnement, c'est-à-dire en fonctionnement normal.

Les contrôleurs de chaque noeud de communication relié à la partie de l'anneau optique qui était précédemment coupée, commandent alors leur amplificateur optique d'émission pour que celui-ci retourne dans un mode d'amplification normal.

Il est à remarquer que si le contrôleur 350, en parallèle de l'exécution de l'algorithme tel que décrit en Fig. 4, détecte des informations transmises sur le canal OSC et représentatives d'une perte de signal optique et générées par un des noeuds de communication du réseau optique 200, le contrôleur 350 confirme ces informations en effectuant la boucle constituée des étapes E400 à E403 pour passer ensuite à l'étape E404 et fermer les interrupteurs optiques 240 et 250.

Il est à remarquer que si le contrôleur 350, en parallèle de l'exécution de l'algorithme tel que décrit en Fig. 4, détecte des informations transmises sur le canal OSC et représentatives d'un rétablissement de signal optique générées par un des noeuds de communication du réseau optique 200, le contrôleur 350 passe à l'étape E409 et ouvre les interrupteurs optiques 240 et 250 si le rétablissement correspond à une perte de signal correspondante précédemment reçue.

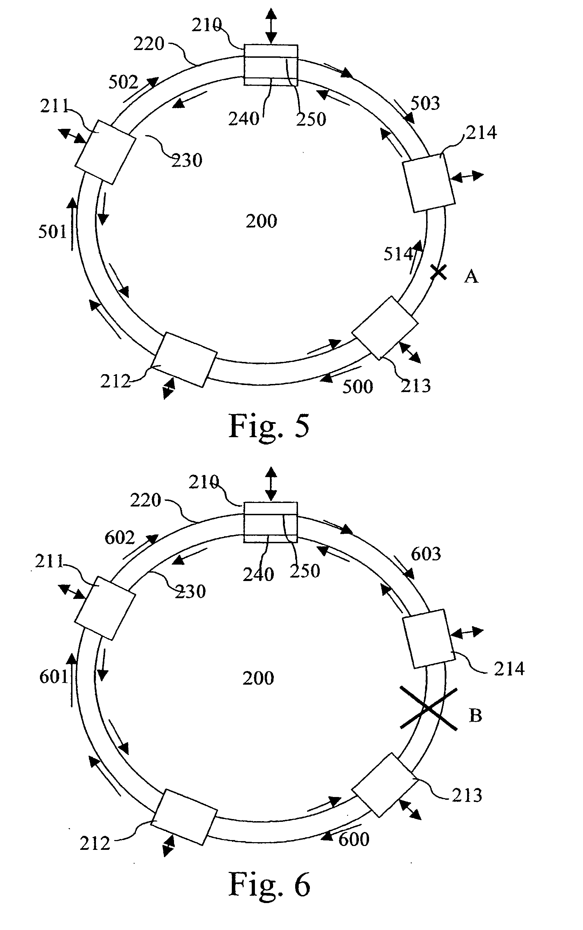

La Fig. 5 représente un réseau optique selon l'invention dans lequel un anneau optique du réseau optique 200 est coupé.

Nous allons décrire dans cet exemple la protection du réseau optique 200 selon l'invention, lors de la coupure de l'anneau optique 220. Cette coupure est notée A en Fig. 5.

Lorsque la partie de l'anneau optique 220 comprise entre les noeuds de communication 213 et 214 est coupée, l'amplificateur optique de réception du noeud de communication 213 détecte la perte du signal optique et le contrôleur du noeud de communication 213 commande l'amplificateur optique d'émission du noeud de communication 213 associé à l'anneau de communication 230 pour que celui-ci passe en mode de réduction automatique de puissance. Le signal optique en sortie du noeud de communication 213 est alors très fortement atténué. Cette atténuation correspond à une ouverture de l'anneau 230 sur la partie de l'anneau 230 comprise entre les noeuds de communication 213 et 214.

Le signal optique en sortie du noeud de communication 213 étant alors très fortement atténué, l'amplificateur optique de réception du noeud de communication 214 passe dans le mode de réduction automatique de puissance. Le contrôleur du noeud de communication 214 commande l'amplificateur optique d'émission du noeud de communication 214 associé à l'anneau de communication 220 pour que celui-ci passe en mode de réduction automatique de puissance.

Parallèlement à cette procédure, le contrôleur 350 du noeud de communication maître 210 a détecté conformément à l'algorithme tel que décrit en référence à la Fig. 4, l'existence d'une coupure dans le réseau optique 200.

Il est à remarquer ici que le contrôleur 350 du noeud de communication maître 210 peut en variante utiliser le message d'informations sur le canal OSC de l'anneau optique 220 pour informer les autres noeuds de communication de cette perte de signal comme confirmation de la détection d'une coupure dans le réseau optique 200.

Le contrôleur 350 du noeud de communication maître 210 commande alors la fermeture des interrupteurs 240 et 250 conformément à l'algorithme décrit à la Fig. 4.

Ainsi, et selon le mode préféré de réalisation, lorsque par exemple le noeud de communication 213 transfère sur le réseau optique 200 des données à destination du noeud de communication 214, les données sont transmises sur l'anneau optique 230 suivant la flèche notée 514 en Fig. 4. Ces données sont fortement atténuées puisque l'amplificateur optique d'émission du noeud de communication 213 est en mode de réduction automatique de gain. L'anneau 230 est ainsi ouvert sur la portion de l'anneau 230 comprise entre les noeuds de communication 213 et 214.

L'anneau optique 220 étant fermé au noeud de communication 210, les données transmises sur l'anneau optique 220 suivant les flèches notées 500, 501, 502 et 503 en Fig. 5. sont néanmoins transmises au noeud de communication 214.

Ainsi, selon l'invention, le réseau optique 200 est configuré selon le second mode de fonctionnement. Les anneaux 220 et 230 sont ouverts et évitent ainsi les problèmes liés au bruit et aux oscillations.

L'anneau 230 est ouvert, car le signal optique est fortement atténué par l'amplificateur optique d'émission du noeud de communication 213. La coupure notée A ouvre aussi l'anneau optique 220.

Selon la variante de réalisation de l'invention dans laquelle chaque noeud de communication 210, 211, 212, 213 et 214 connaît la configuration du réseau optique 200 et transmet les données sur l'anneau optique 220 ou 230 autorisant le transfert d'informations vers le noeud destinataire ou l'anneau optique 220 ou 230 présentant le plus court trajet entre le noeud émetteur et le noeud destinataire. Le noeud de communication 213 transfère sur le réseau optique 200 des données à destination du noeud de communication 214 seulement selon le trajet constitué des flèches notées 500, 501, 502 et 503 en Fig. 5.

Lorsque la coupure notée A de l'anneau optique a été détectée, le contrôleur 350 du noeud de communication maître 210 détecte, conformément à l'algorithme tel que décrit en référence à la Fig. 4, la réparation du réseau optique 200, commande les interrupteurs optiques 240 et 250 et génère un message d'informations sur le canal OSC d'un ou de chaque anneau optique 220 et/ou 230 pour informer les autres noeuds de communication 211, 212, 213 et 214 du rétablissement du réseau optique 200 selon le premier mode de fonctionnement, c'est-à-dire en fonctionnement normal.

Les contrôleurs des noeuds de communication reliés à la partie de l'anneau optique qui était précédemment coupée, commandent alors leur amplificateur optique d'émission respectif pour que celui-ci retourne dans un mode d'amplification normal.

Ainsi, selon ce mode de fonctionnement, tout risque d'oscillation de l'anneau optique lors de la réparation de l'anneau optique endommagé est supprimé. A aucun moment, l'anneau est fermé, les interrupteurs optiques 240 et 250 du noeud de communication maître 210 étant ouverts avant que les amplificateurs optiques d'émission des noeuds de communication reliés à la partie de l'anneau optique qui était précédemment coupée retournent dans un mode d'amplification normal.

La Fig. 6 représente un réseau optique selon l'invention dans lequel les deux anneaux optiques 220 et 230 formant le réseau optique 200 sont coupés.

Le contrôleur 350 du noeud de communication maître 210, en générant aux étapes E400 et E401 des signaux de test sur les canaux de supervision des anneaux optiques 220 et 230, détecte aux étapes E402 et E403 les coupures des anneaux optiques 220 et 230.

Le contrôleur 350 du noeud de communication maître 210 commande la fermeture des interrupteurs optiques 240 et 250 et reconfigure ainsi le réseau optique 200.

Le réseau optique 200 fonctionne alors de la même manière que celle décrite en référence à la Fig. 5.

Le contrôleur 350 du noeud de communication maître 210 génère périodiquement ou de manière continue des signaux de test sur les canaux de supervision des anneaux optiques 220 et 230 afin de déterminer si les coupures des anneaux 220 et 230 ont été réparées ou non par un opérateur.

Si un seul des anneaux optiques est réparé, le contrôleur 350 maintient les interrupteurs optiques 240 et 250 fermés.

Lorsque, et seulement si les deux anneaux optiques sont réparés, le contrôleur 350, conformément à l'étape E409 de l'algorithme de la Fig. 4, commande l'ouverture des commutateurs 240 et 250 pour retourner dans le premier mode de fonctionnement.

Ainsi, le noeud de communication maître 210 résout les problèmes de l'état de la technique lorsqu'un ou plusieurs anneaux sont coupés.

Il est à remarquer que dans la présente description, les informations sont véhiculées par chaque anneau optique de façon unidirectionnelle. Bien entendu, chaque anneau optique peut aussi véhiculer des informations de façon bidirectionnelle, c'est-à-dire dans les deux sens de transmission. Dans ce mode de fonctionnement, les noeuds de communication 210, 211, 212, 213 et 214 sont adaptés pour fonctionner dans un mode bidirectionnel.

Bien entendu, la présente invention n'est nullement limitée aux modes de réalisation décrits ici, mais englobe, bien au contraire, toute variante à la portée de l'homme du métier.

## Revendications

1. Procédé de protection d'un réseau optique (200) configurable dans une première et une seconde configurations, le réseau optique étant constitué d'au moins une paire d'anneaux optiques ouverts (220, 230) reliant des noeuds de communication (210, 211, 212, 213, 214), un des noeuds de communication dit noeud de communication maître (210) comportant des moyens d'ouverture et/ou de fermeture des anneaux optiques (240, 250), les anneaux optiques étant ouverts au niveau du noeud de communication maître dans la première configuration, chaque extrémité de chaque anneau optique (220, 230) étant reliée au noeud de communication maître, **caractérisé en ce que** chaque noeud de communication comporte des amplificateurs optiques d'émission (306, 311) et/ou de réception (302, 314) aptes à fonctionner dans un mode d'amplification des signaux véhiculés par les anneaux optiques ou à fonctionner dans un mode dit de réduction de puissance et **en ce que** le noeud de communication maître (210) effectue les étapes de :
- génération (E405, E406) d'un signal prédéterminé à une extrémité de chaque anneau optique d'une paire d'anneaux optiques,
- détermination (E407, E408) de la présence du signal prédéterminé dans l'autre extrémité de chaque anneau optique,
- commande (E409) d'ouverture des moyens d'ouverture et/ou de fermeture des anneaux optiques si le signal prédéterminé est présent dans l'autre extrémité de chaque anneau optique pour configurer le réseau optique dans la première configuration,
- génération (E410) d'au moins un signal prédéterminé pour commander les amplificateurs d'émission et/ou de réception fonctionnant dans le mode dit de réduction de puissance à fonctionner dans le mode d'amplification des signaux véhiculés par les anneaux optiques.

2. Procédé selon la revendication 1, **caractérisé en ce que** les moyens d'ouverture et/ou de fermeture des anneaux optiques sont des interrupteurs optiques (240, 250).

3. Procédé selon la revendication 1 ou 2, **caractérisé en ce que** le réseau optique est un réseau à multiplexage de longueurs d'ondes, une longueur d'onde d'un canal de supervision étant associée à chaque anneau optique et **en ce que** le signal prédéterminé est généré sur chaque canal de supervision.

4. Procédé selon la revendication 2 ou 3, **caractérisé en ce que** le procédé comporte en outre les étapes :
- génération (E400, E401) d'un signal prédéterminé à une extrémité de chaque anneau optique d'une paire d'anneaux optiques,
- détermination (E402, E403) de l'absence du signal prédéterminé dans au moins une autre extrémité de chaque anneau optique,
- commande (E404) de fermeture des interrupteurs optiques si le signal prédéterminé est absent dans au moins une autre extrémité d'un anneau optique pour configurer le réseau optique dans la seconde configuration.

5. Procédé selon la revendication 4, **caractérisé en ce que** chaque noeud de communication (210, 211, 212, 213, 214) transfère des informations sur chaque anneau optique (220, 230) de la paire d'anneaux optiques à laquelle il est relié.

6. Noeud de communication maître (210) pour la protection d'un réseau optique (200) configurable dans une première et une seconde configurations, le réseau optique étant constitué d'au moins une paire d'anneaux optiques ouverts (220, 230) reliant des noeuds de communication (210, 211, 212, 213, 214), un des noeuds de communication dit noeud de communication maître (210) comportant des moyens d'ouverture et/ou de fermeture (240, 250) des anneaux optiques (220, 230), les anneaux optiques étant ouverts au niveau du noeud de communication maître dans une première configuration, chaque noeud de communication comporte des amplificateurs optiques d'émission (306, 311) et/ou de réception (302, 314) aptes à fonctionner dans un mode d'amplification des signaux véhiculés par les anneaux optiques ou à fonctionner dans un mode dit de réduction de puissance, **caractérisé en ce que** le noeud de communication maître (210) comporte :
- des moyens de génération d'un signal prédéterminé à une extrémité de chaque anneau optique d'une paire d'anneaux optiques,
- des moyens de détermination de la présence du signal prédéterminé dans l'autre extrémité de chaque anneau optique,
- des moyens de commande d'ouverture des moyens d'ouverture et/ou de fermeture des anneaux optiques si le signal prédéterminé est présent dans l'autre extrémité de chaque anneau optique pour configurer le réseau optique dans la première configuration,
- des moyens de génération d'au moins un signal prédéterminé pour commander les amplificateurs d'émission et/ou de réception fonctionnant dans le mode dit de réduction de puissance à fonctionner dans le mode d'amplification des signaux véhiculés par les anneaux optiques.

7. Noeud de communication maître selon la revendication 6, **caractérisé en ce que** les moyens d'ouverture et/ou de fermeture des anneaux optiques sont des interrupteurs optiques (240, 250).

8. Noeud de communication maître selon la revendication 7, **caractérisé en ce que** le noeud de communication maître (210) comporte en outre :
- des moyens de détermination (350, 301, 310) de l'absence du signal prédéterminé dans l'autre extrémité de chaque anneau optique,
- des moyens de commande (350) de fermeture des interrupteurs optiques si le signal prédéterminé est absent dans au moins une autre extrémité d'un anneau optique pour configurer le réseau optique dans la seconde configuration.

9. Système de communication optique configurable dans une première et une seconde configurations, le système de communication optique étant constitué d'au moins une paire d'anneaux optiques (220, 230) ouverts reliant des noeuds de communication (210, 211, 212, 213, 214), un des noeuds de communication dit noeud de communication maître (210) comportant des moyens (240, 250) d'ouverture et/ou de fermeture des anneaux optiques (220, 230), les anneaux optiques étant ouverts au niveau du noeud de communication maître (210) dans la première configuration, chaque extrémité de chaque anneau optique étant reliée au noeud de communication maître, **caractérisé en ce que** :
le noeud de communication maître (210) comporte :
- des moyens de génération (350, 307, 310) d'un signal prédéterminé à une extrémité de chaque anneau optique d'une paire d'anneaux optiques,
- des moyens de détermination (350, 301, 315) de l'absence ou la présence du signal prédéterminé dans au moins une autre extrémité d'un anneau optique (220, 230),
- des moyens de commande (350) de fermeture des moyens d'ouverture et/ou de fermeture des anneaux optiques (240, 250) si le signal prédéterminé est absent dans au moins une autre extrémité d'un anneau optique pour configurer le réseau optique (200) dans la seconde configuration,
- des moyens de commande d'ouverture (350) des moyens d'ouverture et/ou de fermeture des anneaux optiques (240, 250) si le signal prédéterminé est présent dans l'autre extrémité de chaque anneau optique (220, 230) pour configurer le réseau optique (200) dans la première configuration,
les noeuds de communication (211, 212, 213, 214) comportent :
- des amplificateurs optiques d'émission (306, 311) et/ou de réception (302, 314) aptes à fonctionner dans un mode d'amplification des signaux véhiculés par les anneaux optiques ou à fonctionner dans un mode dit de réduction de puissance,
- des moyens de réception (350, 301, 315) d'au moins un message généré par le noeud de communication maître pour changer le mode de fonctionnement des amplificateurs optiques d'émission et/ou de réception,
- des moyens de commande (350) des amplificateurs optiques d'émission et/ou de réception pour fonctionner selon l'un des deux modes de fonctionnement.

## Claims

1. Method for protection of an optical network (200) which can be configured in a first configuration and a second configuration, the optical network being formed by at least one pair of open optical rings (220, 230) connecting communication nodes (210, 211, 212, 213, 214), one of the communication nodes, termed master communication node (210), comprising means for opening and/or closing optical rings (240, 250), the optical rings being open at the level of the master communication node in the first configuration, each end of each optical ring (220, 230) being connected to the master communication node, **characterised in that** each communication node comprises optical amplifiers for emitting (306, 311) and/or receiving (302, 314) which are able to function in a mode for amplification of signals conveyed by the optical rings or to function in a mode termed power reduction and **in that** the master communication node (210) effects the steps of:
- generation (E405, E406) of a predetermined signal at one end of each optical ring of a pair of optical rings,
- determination (E407, E408) of the presence of the predetermined signal in the other end of each optical ring,
- control (E409) of the opening of means for opening and/or closing optical rings if the predetermined signal is present in the other end of each optical ring in order to configure the optical network in the first configuration,
- generation (E410) of at least one predetermined signal in order to command the amplifiers for emitting and/or receiving, functioning in the mode termed power reduction mode, to function in the mode for amplification of signals conveyed by the optical rings.

2. Method according to claim 1, **characterised in that** the means for opening and/or closing the optical rings are optical interrupters (240, 250).

3. Method according to claim 1 or 2, **characterised in that** the optical network is a wavelength multiplexing network, a wavelength of a monitoring channel being associated with each optical ring and **in that** the predetermined signal is generated on each monitoring channel.

4. Method according to claim 2 or 3, **characterised in that** the method comprises furthermore the steps:
- generation (E400, E401) of a predetermined signal at one end of each optical ring of a pair of optical rings,
- determination (E402, E403) of the absence of the predetermined signal in at least one other end of each optical ring,
- control (E404) of the closing of optical interrupters if the predetermined signal is absent in at least one other end of an optical ring in order to configure the optical network (220, 230) in the second configuration.

5. Method according to claim 4, **characterised in that** each communication node (210, 211, 212, 213, 214) transfers information about each optical ring (220, 230) of the pair of optical rings to which it is connected.

6. Master communication node (210) for the protection of an optical network (200) which can be configured in a first configuration and a second configuration, the optical network being formed by at least one pair of open optical rings (220, 230) connecting communication nodes (210, 211, 212, 213, 214), one of the communication nodes, termed master communication node (210), comprising means for opening and/or closing (240, 250) optical rings (220, 230), the optical rings being open at the level of the master communication node in a first configuration, each communication node comprises optical amplifiers for emitting (306, 311) and/or receiving (302, 314) which are able to function in a mode for amplification of signals conveyed by the optical rings or to function in a mode termed power reduction, **characterised in that** the master communication node (210) comprises:
- means for generation of a predetermined signal at one end of each optical ring of a pair of optical rings,
- means for determination of the presence of the predetermined signal in the other end of each optical ring,
- means for control of the opening of means for opening and/or closing optical rings if the predetermined signal is present in the other end of each optical ring in order to configure the optical network in the first configuration,
- means for generation of at least one predetermined signal in order to command the amplifiers for emitting and/or receiving, functioning in the mode termed power reduction, to function in the mode for amplification of signals conveyed by the optical rings.

7. Master communication node according to claim 6, **characterised in that** the means for opening and/or closing optical rings are optical interrupters (240, 250).

8. Master communication node according to claim 7, **characterised in that** the master communication node (210) comprises furthermore:
- means for determination (350, 301, 310) of the absence of the predetermined signal in the other end of each optical ring,
- means for control (350) of the closing of optical interrupters if the predetermined signal is absent in at least one other end of an optical ring in order to configure the optical network in the second configuration.

9. Optical communication system which can be configured in a first configuration and a second configuration, the optical communication system being formed by at least one pair of open optical rings (220, 230) connecting communication nodes (210, 211, 212, 213, 214), one of the communication nodes, termed master communication node (210), comprising means (240, 250) for opening and/or closing optical rings (220, 230), the optical rings being open at the level of the master communication node (210) in the first configuration, each end of each optical ring being connected to the master communication node, **characterised in that** :
the master communication node (210) comprises:
- means for generation (350, 307, 310) of a predetermined signal at one end of each optical ring of a pair of optical rings,
- means for determination (350, 301, 315) of the absence or the presence of the predetermined signal in at least one other end of an optical ring (220, 230),
- means for control (350) of the closing of means for opening and/or closing optical rings (240, 250) if the predetermined signal is absent in at least one other end of an optical ring in order to configure the optical network (200) in the second configuration,
- means for control of the opening (350) of means for opening and/or closing optical rings (240, 250) if the predetermined signal is present in the other end of each optical ring (220, 230) in order to configure the optical network (200) in the first configuration,
the communication nodes (211, 212, 213, 214) comprise:
- optical amplifiers for emitting (306, 311) and/or receiving (302, 314) which are able to function in a mode for amplification of signals conveyed by the optical rings or to function in a mode termed power reduction,
- means for receiving (350, 301, 315) at least one message generated by the master communication node in order to change the functioning mode of the optical amplifiers for emitting and/or receiving,
- means for control (350) of optical amplifiers for emitting and/or receiving in order to function according to one of the two functioning modes.

## Patentansprüche

1. Verfahren zum Schutz eines optischen Netzwerks (200), das in einer ersten und in einer zweiten Konfiguration konfiguriert werden kann, wobei das optische Netzwerk aus mindestens einem Paar offener optischer Ringe (220, 230) besteht, die Kommunikationsknoten (210, 211, 212, 213, 214) verbinden, wobei einer der Kommunikationsknoten, der Hauptkommunikationsknoten (210) genannt wird, Mittel zum Öffnen und/oder Schließen der optischen Ringe (240, 250) aufweist, wobei die optischen Ringe auf der Ebene des Hauptkommunikationsknotens in der ersten Konfiguration offen sind, wobei jedes Ende jedes optischen Rings (220, 230) mit dem Hauptkommunikationsknoten verbunden ist, **dadurch gekennzeichnet, dass** jeder Kommunikationsknoten optische Sendeverstärker (306, 311) und/oder Empfangsverstärker (302, 314) aufweist, die in einem Verstärkungsmodus der Signale, die von den optischen Ringen befördert werden, oder in einem so genannten Leistungsverringerungsmodus funktionieren können, und dass der Hauptkommunikationsknoten (210) die folgenden Schritte durchführt:
- Erzeugen (E405, E406) eines vorbestimmten Signals an einem Ende jedes optischen Rings eines Paars optischer Ringe,
- Bestimmen (E407, E408) des Vorhandenseins des vorbestimmten Signals an dem anderen Ende jedes optischen Rings,
- Steuern (E409) zum Öffnen der Öffnungs- und/oder Schließmittel der optischen Ringe, wenn das vorbestimmte Signal am anderen Ende jedes optischen Rings vorhanden ist, um das optische Netzwerk in der ersten Konfiguration zu konfigurieren,
- Erzeugen (410) mindestens eines vorbestimmten Signals, um die Sende- und/oder Empfangsverstärker, die im so genannten Leistungsverringerungsmodus funktionieren, so zu steuern, dass sie in dem Verstärkungsmodus der Signale, die von den optischen Ringen befördert werden, funktionieren.

2. Verfahren nach Anspruch 1, **dadurch gekennzeichnet, dass** die Mittel zum Öffnen und/oder Schließen der optischen Ringe optische Ein/Aus-Schalter (240, 250) sind.

3. Verfahren nach Anspruch 1 oder 2, **dadurch gekennzeichnet, dass** das optische Netzwerk ein Netzwerk mit einem Multiplexen von Wellenlängen ist, wobei eine Wellenlänge eines Überwachungskanals mit jedem optischen Ring verbunden ist, und dass das vorbestimmte Signal auf jedem Überwachungskanal erzeugt wird.

4. Verfahren nach Anspruch 2 oder 3, **dadurch gekennzeichnet, dass** das Verfahren ferner die folgenden Schritte umfasst:
- Erzeugen (E400, E401) eines vorbestimmten Signals an einem Ende jedes optischen Rings eines Paars optischer Ringe,
- Bestimmen (E402, E403) des Nichtvorhandenseins des vorbestimmten Signals an mindestens einem anderen Ende jedes optischen Rings,
- Steuern (E404) des Schließens der optischen Ein/Aus-Schalter, wenn das vorbestimmte Signal an mindestens einem anderen Ende eines optischen Rings nichtvorhanden ist, um das optische Netzwerk in der zweiten Konfiguration zu konfigurieren.

5. Verfahren nach Anspruch 4, **dadurch gekennzeichnet, dass** jeder Kommunikationsknoten (210, 211, 212, 213, 214) Informationen auf jeden optischen Ring (220, 230) des Paars optischer Ringe überträgt, mit dem er verbunden ist.

6. Hauptkommunikationsknoten (210) für den Schutz eines optischen Netzwerks (200), das in einer ersten und in einer zweiten Konfiguration konfiguriert werden kann, wobei das optische Netzwerk aus mindestens einem Paar offener optischer Ringe (220, 230) besteht, die Kommunikationsknoten (210, 211, 212, 213, 214) verbinden, wobei einer der Kommunikationsknoten, der Hauptkommunikationsknoten (210) genannt wird, Mittel zum Öffnen und/oder Schließen (240, 250) der optischen Ringe (220, 230) aufweist, wobei die optischen Ringe auf der Ebene des Hauptkommunikationsknotens in einer ersten Konfiguration offen sind, wobei jeder Konfigurationsknoten optische Sendeverstärker (306, 311) und/oder Empfangsverstärker (302, 314) aufweist, die in einem Verstärkungsmodus der Signale, die von den optischen Ringen befördert werden, oder in einem so genannten Leistungsverringerungsmodus funktionieren können, **dadurch gekennzeichnet, dass** der Hauptkommunikationsknoten (210) folgendes umfasst:
- Mittel zum Erzeugen eines vorbestimmten Signals an einem Ende jedes optischen Rings eines Paars optischer Ringe,
- Mittel zum Bestimmen des Vorhandenseins des vorbestimmten Signals an dem anderen Ende jedes optischen Rings,
- Mittel zum Steuern des Öffnens der Mittel zum Öffnen und/oder Schließen der optischen Ringe, wenn das vorbestimmte Signal an dem anderen Ende jedes optischen Rings vorhanden ist, um das optische Netzwerk in der ersten Konfiguration zu konfigurieren,
- Mittel zum Erzeugen mindestens eines vorbestimmten Signals zum Steuern der Sendeverstärker und/oder Empfangsverstärker, die in dem so genannten Leistungsverringerungsmodus funktionieren, um in dem Verstärkungsmodus der von den optischen Ringen beförderten Signale zu funktionieren.

7. Hauptkommunikationsknoten nach Anspruch 6, **dadurch gekennzeichnet, dass** die Mittel zum Öffnen und/oder Schließen der optischen Ringe optische Ein/Aus-Schalter (240, 250) sind.

8. Hauptkommunikationsknoten nach Anspruch 7, **dadurch gekennzeichnet, dass** der Hauptkommunikationsknoten (210) ferner folgendes umfasst:
- Mittel zum Bestimmen (350, 301, 310) des Nichtvorhandenseins des vorbestimmten Signals an dem anderen Ende jedes optischen Rings,
- Mittel zum Steuern (350) des Schließens der optischen Ein/Aus-Schalter, wenn das vorbestimmte Signal an mindestens einem anderen Ende eines optischen Rings nichtvorhanden ist, um das optische Netzwerk in der zweiten Konfiguration zu konfigurieren.

9. System zur optischen Kommunikation, das in einer ersten und in einer zweiten Konfiguration konfigurierbar ist, wobei das optische Kommunikationssystem aus mindestens einem Paar offener optischer Ringe (220, 230) besteht, die die Kommunikationsknoten (210, 211, 212, 213, 214) verbinden, wobei einer der Kommunikationsknoten, der Hauptkommunikationsknoten (210) genannt wird, Mittel (240, 250) zum Öffnen und/oder Schlie-ßen der optischen Ringe (220, 230) aufweist, wobei die optischen Ringe auf der Ebene des Hauptkommunikationsknotens (210) in der ersten Konfiguration offen sind, wobei jedes Ende jedes optischen Rings mit dem Hauptkommunikationsknoten verbunden ist, **dadurch gekennzeichnet, dass**:
der Hauptkommunikationsknoten (210) folgendes umfasst:
- Mittel zum Erzeugen (350, 307, 310) eines vorbestimmten Signals an einem Ende jedes optischen Rings eines Paars optischer Ringe,
- Mittel zum Bestimmen (350, 301, 315) des Nichtvorhandenseins oder des Vorhandenseins des vorbestimmten Signals an mindestens einem anderen Ende eines optischen Rings (220, 230),
- Mittel zum Steuern (350) des Schließens der Mittel zum Öffnen und/oder Schließen der optischen Ringe (240, 250), wenn das vorbestimmte Signal an mindestens einem anderen Ende eines optischen Rings nichtvorhanden ist, um den optischen Ring (200) in der zweiten Konfiguration zu konfigurieren,
- Mittel zum Steuern des Öffnens (350) der Mittel zum Öffnen und/oder zum Schließen der optischen Ringe (240, 250), wenn das vorbestimmte Signal an dem anderen Ende jedes optischen Rings (220, 230) vorhanden ist, um das optische Netzwerk (200) in der ersten Konfiguration zu konfigurieren,
wobei die Kommunikationsknoten (211, 212, 213, 214) folgendes umfassen:
- optische Sendeverstärker (306, 311) und/oder Empfangsverstärker (302, 314), die in einem Modus zum Verstärken der von den optischen Ringen beförderten Signale oder in einem so genannten Leistungsverringerungsmodus funktionieren können,
- Mittel zum Empfang (350, 301, 315) mindestens einer Meldung, die von dem Hauptkommunikationsknoten erzeugt wird, um den Betriebsmodus der optischen Sendeverstärker und/oder Empfangsverstärker zu wechseln,
- Mittel zum Steuern (350) der optischen Sendeverstärker und/oder Empfangsverstärker, um gemäß einem der Betriebsmodi zu funktionieren.
